# EUROPEAN PATENT APPLICATION

(11) **EP 4 697 534 A1**
(43) Date of publication of application: **18.02.2026**
(21) Application number: 25195475.6
(22) Date of filing: 12.08.2025
(51) Int. Cl.: H02J 1/10, H02J 4/00

(54) **HIGH VOLTAGE DC/DC FOR A SUSTAINABLE ENERGY INTERFACE TO POWER CONVERSION SYSTEM**

(30) Priority: 13.08.2024 US 202463682519 P; 16.07.2025 US 202519271432
(71) Applicant: Vertiv Corporation, Westerville, OH 43082 (US)
(72) Inventor: PECORARI, Stefano, Westerville, 43082 (US); LI, James, Westerville, 43082 (US); HEBER, Brian, Westerville, 43082 (US)
(74) Representative: Beal, James Michael

(57) **Abstract**

A power component may include a rectifier circuit configured to receive a first input power from a first power source and convert the first input power to a first direct current (DC) power, wherein the first input power comprises an alternative current (AC). The component may include one or more DC/DC converter circuits configured to receive one or more second input powers from one or more second power sources and convert the one or more second input powers into one or more second DC powers. The component may include a DC link configured to receive the first DC power and the one or more second DC power, wherein the DC link merges an output of the first DC source and output of the one or more second DC sources to produce a final DC power. The component may include an inverter circuit configured to receive the final DC power.

## Description

### CROSS-REFERENCE TO RELATED APPLICATION

The present application claims priority to U.S. Provisional Patent Application Number 63/682,519 filed August 13, 2024, and to U.S. Non-Provisional Patent Application Number 19/271,432, filed July 16, 2025.

### TECHNICAL FIELD

The present disclosure relates to power control systems for electronic equipment, and more particularly to power conversion systems with multiple power inputs.

### BACKGROUND

Green power systems, a subset of renewal renewable energy systems that provide high environmental benefit, are increasingly being utilized to power, or partially power high-power electrical systems, such as high-power electrical systems used for powering electronic facilities such as telecommunication hubs and server farms. These high-power electrical facilities typically rely on power supply components such as uninterruptible power supplies (UPS) to manage electrical power, which is received mainly from an electric utility.

In order to manage utility power, a UPS will convert incoming alternating current (AC) power from the electrical utility to direct current (DC) power that can be either stored in a battery or converted back to AC power for powering a load. Many green power systems (e.g., wind power systems, solar power systems, battery energy storage systems, and fuel cells) already provide power as DC power. However, the DC voltages produced by these green power systems are often not compatible with the DC voltages used by the UPS. Accordingly, it may be advantageous to have a power component that can receive power from both an electric utility and a green power system and use the received power to power a load.

### SUMMARY

Accordingly, the present disclosure is directed toward a power component, a system, and a method for receiving power from both an electric utility and a green power source and using the received power to power a load.

In some aspects, the techniques described herein relate to a power component configured to supply an output power including: a rectifier circuit configured to receive a first input power from a first power source and convert the first input power to a first direct current (DC) power, wherein the first input power includes an alternative current (AC); one or more DC/DC converter circuits configured to receive one or more second input powers from one or more second power sources and convert the one or more second input powers into one or more second DC powers; a DC link configured to receive the first DC voltage and the one or more second DC voltages, wherein the DC link merges an output of the first DC source and an output of the one or more second DC sources to produce a final DC power comprising a final DC voltage; an inverter circuit configured to receive the final DC voltage and convert the final DC voltage to the output power; and a fault protection circuit configured to interrupt power flow upon a detection of an improper power flow between the one or more second power sources and at least one of the one or more DC/DC converter circuits.

In some aspects, the techniques described herein relate to a power system including: one or more power components configured to supply an output power including: a rectifier circuit configured to receive a first input power from a first power source and convert the first input power to a first direct current (DC) power, wherein the first input power includes an alternative current (AC); one or more DC/DC converter circuits configured to receive one or more second input powers from one or more second power sources and convert the one or more second input powers into one or more second DC powers; a DC link configured to receive the first DC voltage and the one or more second DC voltages, wherein the DC link merges an output of the first DC source and an output of the one or more second DC sources to produce a final DC power; an inverter circuit configured to receive the final DC power and convert the final DC power to the output power; and a fault protection circuit configured to interrupt power flow upon a detection of an improper power flow between the one or more second power sources and at least one of the one or more DC/DC converter circuits.

In some aspects, the techniques described herein relate to a method supplying power to a load including: receiving a first input power from a first power source; converting the first input power from an alternating current (AC) power to a first direct current (DC) power; receiving one or more second input powers from one or more second power sources; converting the one or more second input powers to one or more second DC powers; merging the first DC power and the one or more second DC power to produce a final DC power; and transmitting the final DC power to the load.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE FIGURES

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.
FIG. 1 illustrates a block diagram of a power system for supplying power to a load, in accordance with one or more embodiments of the disclosure.
FIG. 2A illustrates a block diagram of a power system for supplying power to a load with details of the power component, in accordance with one or more embodiments of the disclosure.
FIG. 2B illustrates a block diagram of a power system for supplying power to a load with details of the power component, in accordance with one or more embodiments of the disclosure.
FIG. 2C illustrates a block diagram of a power system for supplying power to a load that includes two DC/DC converter circuits 202a-b within the power component, in accordance with one or more embodiments of the disclosure.
FIG. 2D illustrates a block diagram of a power system for supplying power to a load that includes two DC/DC converter circuits and a fault protection circuit within the power component, in accordance with one or more embodiments of the disclosure.
FIG. 2E illustrates a block diagram of a power system for supplying power to a load that includes two DC/DC converter circuits and multiple fault protection circuits within the power component, in accordance with one or more embodiments of the disclosure.
FIG. 3 illustrates a schematic of a DC/DC converter circuit, in accordance with one or more embodiments of the disclosure.
FIGS. 4A-4D illustrate block diagrams depicting the flow of electrical power through the system via the power component to power the load, in accordance with one or more embodiments of the disclosure.
FIGS. 5A-5B illustrate block diagrams of systems for delivering power to a load, in accordance with one or more embodiments of the disclosure.
FIG. 6 illustrates a process flow diagram depicting a method for supplying power to a load, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art, having the benefit of the instant disclosure, that the embodiments disclosed herein may be practiced without some of these specific details. In other instances, well-known features may not be described in detail to avoid unnecessarily complicating the instant disclosure.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present), and B is false (or not present), A is false (or not present) and B is true (or present), and both A and B are true (or present).

In addition, the use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein, any reference to "one embodiment" or "embodiments" means that a particular element, feature, structure, or characteristic described in connection with the embodiment is included in at least one embodiment disclosed herein. The appearances of the phrase "in embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Reference will now be made in detail to the subject matter disclosed, which is illustrated in the accompanying drawings.

Disclosed is a power component, such as a power supply or uninterruptible power supply (UPS) that can receive both a first input power from a first power source (e.g., an electric utility) and one or more second input powers from one or more second power sources (e.g., a solar power source) and use the received input power to power a load. The power component includes a rectifier circuit that receives a first input power from the first power source and converts the first input power into a first DC link power. The power component further includes one or more DC/DC converters configured to receive one or more second input powers from one or more second power sources and convert the one or more second input powers into one or more second DC link powers. The power component further includes a DC link that receives the first DC power and the one or more second power, merges the an output of the first DC source (e.g., the first DC power) and output of the one or more second sources (e.g., the one or more second DC powers) to produce a final DC power. The power component may further include an inverter circuit that converts the final DC power to an output power that can power a load, such as a bank of servers. The power component may also include safety features that provide load protection.

Embodiments of the present disclosure are particularly advantageous, as the one or more second power sources, such as green power sources (e.g., solar power sources, fuel cells), often output DC power that is incompatible with the power component. For example, the DC voltages used and/or produced by power components used in data centers typically range from 400 VDC to 600 VDC (e.g., with internal bus voltages of approximately 700 VDC to 800 VDC) with DC/DC converters used in these types of systems typically limited to DC voltage input up to 700 VDC. In contrast, green power sources, such as solar power sources, battery energy storage system (BESS) power sources, wind power sources, and fuel cell power sources typically have higher DC voltages of approximately 800 VDC to 1500 VDC. Embodiments of the present disclosure allow power from these green power sources to be used in addition to utility power without risk of catastrophic failure.

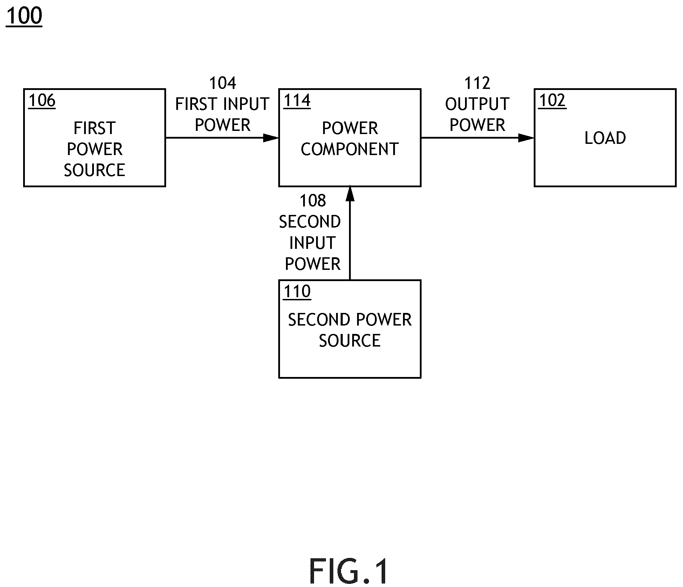

FIG. 1 illustrates a block diagram of a power system 100 for supplying power to a load 102, in accordance with one or more embodiments of the disclosure. Power for the power supply system 100 may include a first input power 104 sourced from a first power source 106. The first power source 106 may include a utility, power company, or other traditional external power source. For example, the first input power 104 may include a high AC power (e.g., 34.5 kV) from a power company. The system 100 may include or be coupled to multiple first power sources 106,

In embodiments, power for the power system 100 may include one or more second input powers 108 from one or more second power sources 110. For example, the one or more second power sources 110 may include "green" power or power sources having a low-environmental impact including, but not limited to, a solar power generator, a fuel cell, a wind power generator, a hydroelectric generator, a biomass power source, a biogas power source, a nuclear power source, a flywheel-based power source, a battery energy storage system (BESS) or any renewable energy source. The second power source 110 may also include hybrid energy sources. For example, the second power source 110 may include a combination of a renewable energy source (e.g., a solar generator) coupled to a battery). The power system 100 may receive power from any number of second power sources 110 and any combination of second power sources 110.

In embodiments, the system 100 includes or receives power from a BESS (a second power source 110) that has been charged via the first input power 104 and/or the second input power 108 from another second power source 110 (e.g., the BESS having bidirectional capability). For example, the BESS may receive power from the first power source 106 and/or another second power source 110 (e.g., a solar power generator), then transmit the power to the system 100 when the first power source 106 or other second power source is providing less than 100% of output power 112 to the load 102.

In embodiments, the system 100 includes a power component 114 that is configured to receive power from the first power source 106 and the one or more second power sources 110 and supply output power 112 to the load 102. The power component 114 is configured to supply the load 102 with output power 112 supplied from the first power source 106, one or more of the second power sources 110, or a mixture (e.g., a merging) of power supplied from the first power source 106 and the one or more second power sources 110. The power components 114 may include any component capable of converting one or more input powers to an output power including, but not limited to, an uninterruptible power supply (UPS), a power conditioner, or a battery backup system.

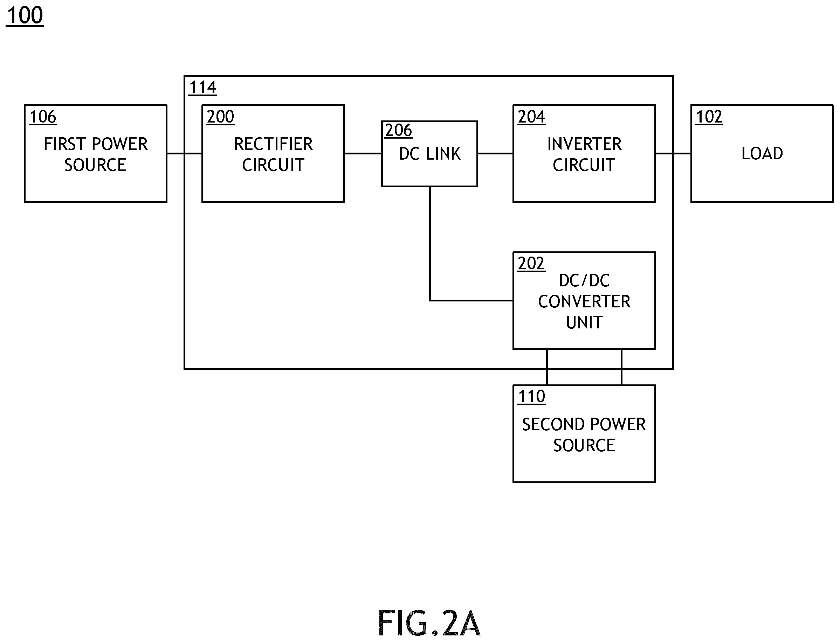

FIG. 2A illustrates a block diagram of a power system 100 for supplying power to a load 102 with details of the power component 114, in accordance with one or more embodiments of the disclosure. The power component 114 is configured to receive first input power 104, such as alternating current (AC) power, from the first power source 106 and receive a second input power 108, such as a direct current (DC) power, from the one or more second power sources 110 and output an output power to the load 102.

In embodiments, the power component 114 includes a rectifier circuit 200 configured to receive the first input power 104 from a first power source 106 and convert the first input power 104 to a first DC power, wherein the first input power 104 comprises an AC power. The rectifier circuit 200 may include any type of rectifying elements including, but not limited to, a single-phase rectifier, a half-wave rectifier, a full-wave rectifier, a bridge rectifier, a center tap transformer, a three-phase rectifier, a three-phase, half-wave circuit, a three-phase, full-wave circuit using center-tapped transformer, an uncontrolled three-phase bridge rectifier, a three-phase bridge controlled rectifier, a voltage multiplying rectifier, a Cockcroft-Walton voltage multiplier, linear rectifiers, and switch-mode rectifiers. For example, the rectifier circuit 200 may include a three-phase, full-wave bridge rectifier that can receive utility AC power (e.g., a 34.5 kV feed) and convert the utility AC power to a DC power within a range of 500 VDC to 2000 VDC. For instance, the rectifier may convert the AC power to a DC power having a voltage of approximately 780 VDC.

In embodiments, the power component 114 includes one or more DC/DC converter circuits 202 configured to receive one or more second input powers 108 from one or more second power sources 110 and convert the one or more second input powers 108 into one or more second DC power (e.g., reducing the DC voltage). The DC/DC converter circuit 202 may include any type of DC/DC converter elements including, but not limited to, a switched-mode DC/DC converter, a magnetic DC/DC converter, a bidirectional DC/DC converter, a hard switched DC/DC converter, a resonant DC/DC converter, a continuous DC/DC converter, or a discontinuous DC/DC converter. The DC/DC converter circuit 202 may include one or more step-down (buck) circuitry, step-up (boost) circuitry, split-pi (boost-buck) circuitry, push-pull (half bridge) circuitry. For example, the DC/DC converter circuit 202 may include a buck converter or a buck/boost converter that can receive a second input power 108 of, or approximately, 800 VDC to 1500 VDC and convert the second input power to a second DC voltage equal to or less than 800 VDC.

In embodiments, the power component 114 includes an inverter circuit 204 configured to receive a final DC power and convert the final DC power to the output power 112, such as an AC power that is utilized by downstream equipment. The inverter circuit 204 may include any type of inverter elements including, but not limited to, controlled rectifier inverters, thyristors, hybrid inverters and three-phase inverters. For example, the inverter circuit may include a three-phase inverter configured as a voltage source inverter, a current source inverter, a pulse width modulation inverter, or a cascaded H-bridge inverter.

In embodiments, the power component 114 includes a DC link 206, configured to receive the first DC power and one or more second DC powers. The DC link 206 then merges an output of the first DC source (e.g., the first DC power) and an output of the one or more second DC sources (e.g., the one or more second DC powers) to generate the final DC power that is received by the inverter circuit 204. The DC link 206 functions as a connection, buffer, and/or power storage between elements of the power component 114, such as the rectifier circuit 200, the inverter circuit 204 and/or the one or more DC/DC converter circuits 202

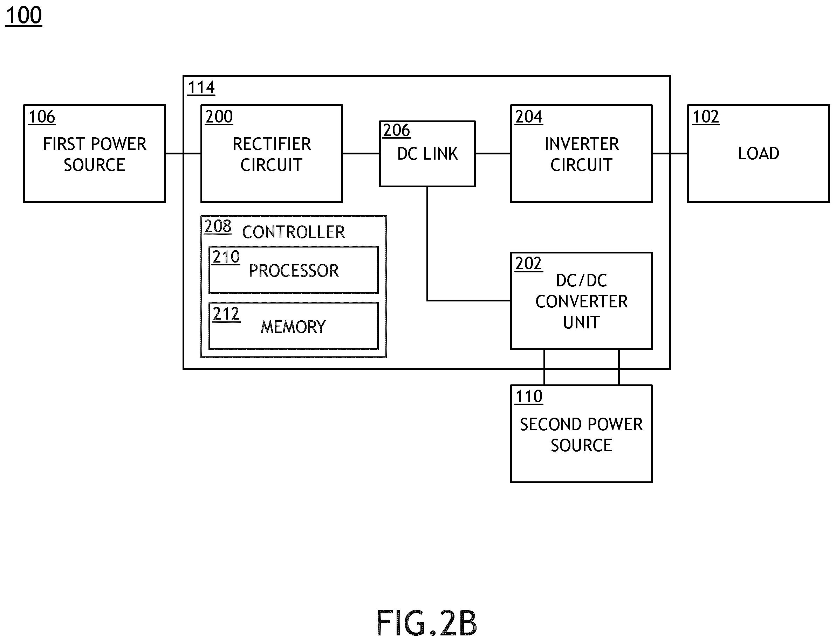

FIG. 2B illustrates a block diagram of a power system 100 for supplying power to a load 102 with details of the power component 114, in accordance with one or more embodiments of the disclosure. In embodiments, the power component 114 includes one or more controllers 208 communicatively coupled to one or more elements of the power components (e.g., the inverter circuit 204, the rectifier circuit 200, the one or more DC/DC converter circuits, and the DC link 206). In embodiments, the one or more controllers 208 acquire information associated with the one or more elements of the power components, the first power source 106, the one or more second power sources 110, and/or load 102 (e.g., via one or more sensors). Based on the acquired information and/or user inputs, the controller causes changes in the power component 114 and/or one or more power component elements that result in a change in the power flow and/or the conversion of power as power flows from the first power source 106 and/or the one or more second power sources 110 to the load 102.

In embodiments, the controller 208 includes one or more processors 210 and memory 212. For example, the memory 212 may maintain program instructions configured to cause the one or more processors 210 to carry out any of the one or more process steps described throughout the present disclosure. For example, the one or more processors 210, based on the instructions stored in memory 212 may cause the power component 114 to determine power flow between the first power source 106 and/or the one or more second power sources 110.

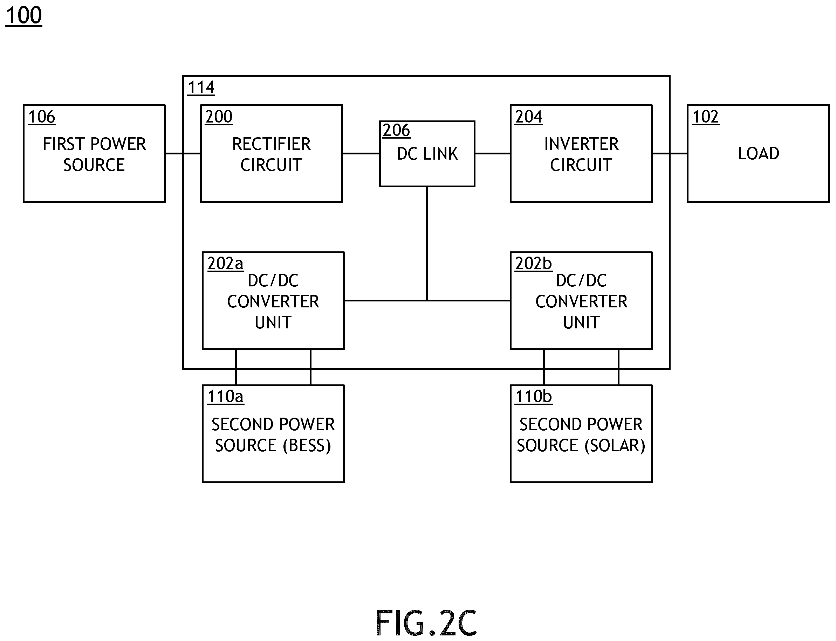

FIG. 2C illustrates a block diagram of a power system 100 for supplying power to a load 102 that includes two DC/DC converter circuits 202a-b within the power component 114, in accordance with one or more embodiments of the disclosure. The two DC/DC converter circuits 202a-b are shown receiving second input power from respective second power sources 110a-b (e.g., a BESS and a solar power generator). For example, the output power 112 to the load 102 may include power flowing from the first power source 106 and/or the one or more second power sources 110a-b, with the DC output from the first power source 106 and/or the one or more second power sources 110a-b merged by the DC link 206.

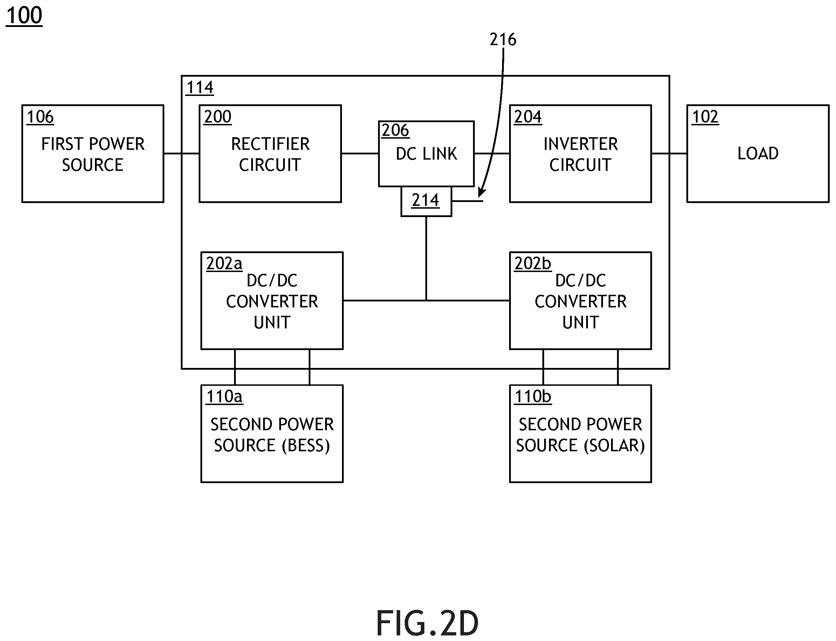

In embodiments, the power component 114 includes a fault protection circuit 214 configured to interrupt power flow upon a detection of an improper power flow (e.g., overvoltage) between the one or more second power sources 110a-b and at least one of the one or more DC/DC converters, as shown in FIG. 2D. The fault protection circuit 214 provides load protection in the case of a fault within the one or more DC/DC converter circuits 202a-b, reducing the risk of an improper DC voltage from reaching the inverter circuit 204 and/or the load 102. The fault protection circuit may include one or more fuses 216 that, when overloaded, interrupt the flow of power. The one or more fuses may include, but not be limited to, an expulsion fuse, an oil fuse, a current-limiting fuse, a high rupturing capacity fuse, a cartridge fuse, a rewirable fuse, or a solid-state fuse. The fault protection circuit may be communicatively coupled to the one or more controllers 208 or other control logic within the power component 114.

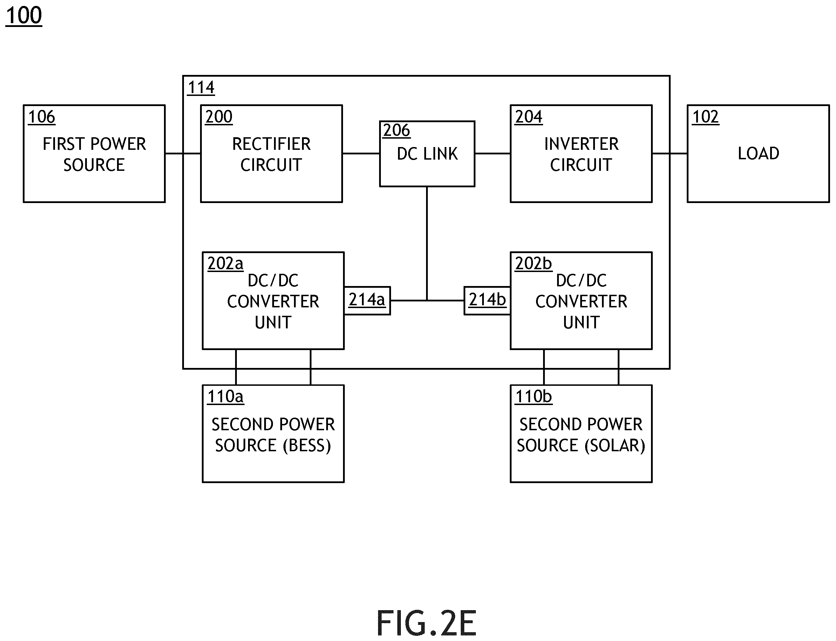

In embodiments, the power component 114 includes fault protection circuits 214a-b at the output of one or more of the DC/DC converter circuits 202a-20b, as shown in FIG. 2E. The fault protection circuits 214a-b may further include respective fuses 216. Fault protection circuits 214 may be positioned at the input of the one or more DC/DC converters. The power component 114 may include any number or combination of placement of the fault protection circuits 214. For example, the power components 114 may include one or more fault protection circuits 214 at the DC link 206, the output of the one or more DC/DC converter circuits 202a-b and/or the input of the one or more DC/DC converter circuits 202a-b.

In some embodiments, the fault protection circuit 204 includes a pyro-fuse. A pyro-fuse is a fuse 216 with an internal explosive charge that can be fired to immediately open circuitry within the power component 114. For example, the pyro-fuse may be incorporated between the output of the DC/DC converter circuit 202a-b and the DC link 206. In another example, the pyrofuse may be incorporated at the input of the DC/DC converter circuit 202a-b. In another example, the pyro-fuse may be connected (e.g., in series) to the one or more DC/DC converter circuits 202a-b (e.g., for positive and/or negative input). For instance, in case of battery input overcurrent (e.g., to or from the BESS), DC link 206 overvoltage, DC/DC converter circuit desaturation, and/or other conditions, the control logic of the DC/DC converter circuit and/or the fault protection circuit 214 will fire the one or more pyro-fuses, interrupting the current flow and protecting the power component 114. The fault protection circuit may include additional protection circuitry, such as a crowbar protection subcircuit triggerable by the control logic that creates a low impedance current path. For example, crowbar protection may be configured to generate a low impedance current path downstream the pyro-fuses and triggered by the control logic can be integrated for further safety

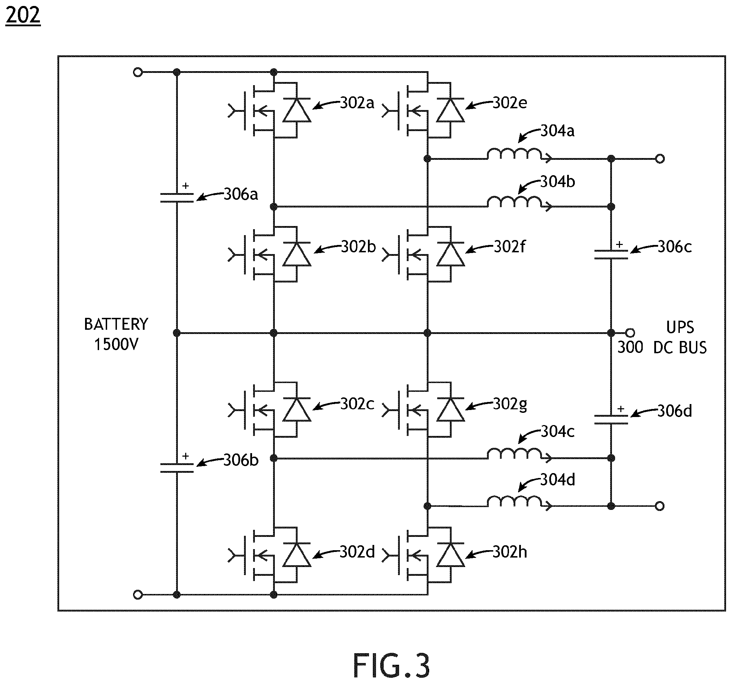

FIG. 3 illustrates a schematic of a DC/DC converter circuit 202, in accordance with one or more embodiments of the disclosure. For example, the DC/DC converter circuit 202 is shown communicatively coupled to a battery of a second power source 110a (e.g., a BESS), and a DC bus 300 of the power component 114, the DC bus electrically coupled to, or integrated within, the DC link 206. The DC/DC converter circuit 202 includes an array of switches 302a-h (e.g., for modulating the flow of power), with one or more switches 302 power adjacent to a connection leading to one or more inductors 304a-d. The DC/DC converter circuit 202 further includes a set of capacitors 306a-d (e.g., for filtering/smoothing the voltage). As shown in FIG. 3, the DC/DC converter circuit 202 may include an interleaving topology, with two or more legs in parallel. The DC/DC converter circuit 202 may include or be coupled to an internal symmetrical DC bus. In embodiments, the DC/DC converter circuit 202 accepts second input powers 108 within a range of 0 to 10000 VDC. For example, the DC/DC converter circuit 202 may be configured to accept a second input power 108 of approximately 1500 VDC.

As shown in FIG. 3, the DC/DC converter circuit 202 may include a symmetrical structure that facilitates the DC/DC converter circuit 202 to split a high-voltage input (e.g., 1500 VDC) into two rails of half voltage (e.g., 750 VDC each), allowing the use of lower voltage switches, such as switches operating in the 1200 V blocking voltage range. Lower voltage switches are often faster than high voltage switches and can have lower switching losses, which may improve power density and efficiency.

The capacitors 306a-d may include DC film capacitors, such as for the capacitors 306 positioned on the DC input side. The capacitors 306 may include electrolytic capacitors.

The DC/DC converter circuit 202 may be implemented with different topologies or embodiments and may provide, or not provide, galvanic isolation (e.g., galvanic isolation provided via resonant or buck topologies). The power switches used in the DC/DC converter circuit 202 may include, but not be limited to, insulated-gate bipolar transistors (IGBT), silicon carbide (SiC) switches, metal-oxide-semiconductor field-effect transistor (MOSFET) switches, gallium nitride (GaN) devices, wide bandgap (WBG) semiconductors (e.g., which may include IGBTs, SiCs, MOSFETs and GaNs), or other switch types. The use of wide bandgap semiconductor switches provides higher switching frequencies and lower power losses. Inductor design and performance may be aligned to power switches and operating conditions. The DC/DC converter circuit 202 may include other electronic elements and/or have differing numbers and/or organization of the electronic elements (e.g., MOSFETs, inductors, and capacitors. Therefore, this description of the DC/DC converter circuit should not be interpreted as a limitation, but merely as an illustration.

In embodiments, one or more of the second power sources 110a stores power, such as power from the first power source 106 and/or one or more of the second power sources 110. For example, for a second power source 110a configured as, or including, a battery (e.g., the BESS), the second power source 110a may receive power from the first power source 106 that charges the battery (e.g., the power component 114 and the second power source 110 having bidirectional capability). In another example, for a second power source 110a configured as, or including, a battery, the second power source 110A may receive power from another secondary power source 110b. For instance, one or more batteries of the second power source 110a may be charged by another second power source 110b that includes a solar generator. Similarly, a second power source 110 configured with flywheel technology, or other bidirectional technology, may also transmit and receive power from the power component 114.

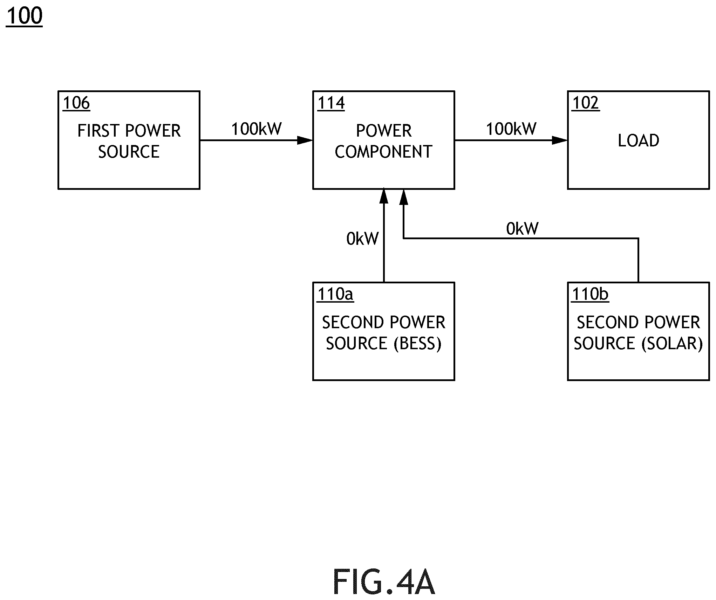

FIGS. 4A-4D illustrate block diagrams depicting the flow of electrical power through the system 100 via the power component 114 to power the load 102, in accordance with one or more embodiments of the disclosure. The figures illustrate a system 100 that includes the first power source 106 and two second power sources 110a-b (e.g., a BESS and a solar generator, respectively). The second power sources 110 may include any number or combination of second power sources 110 as described herein.

In embodiments, the system 100 is configured to deliver power to the load 102 using only the first power source 106. For example, the load 102 may receive power (e.g., 100kW) from the power component 114, which receives power from only the first power source 106, as shown in FIG. 4A.

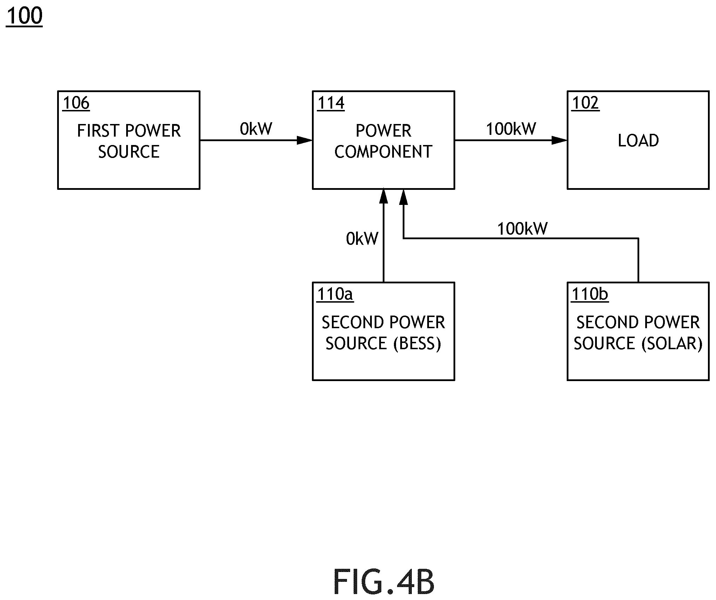

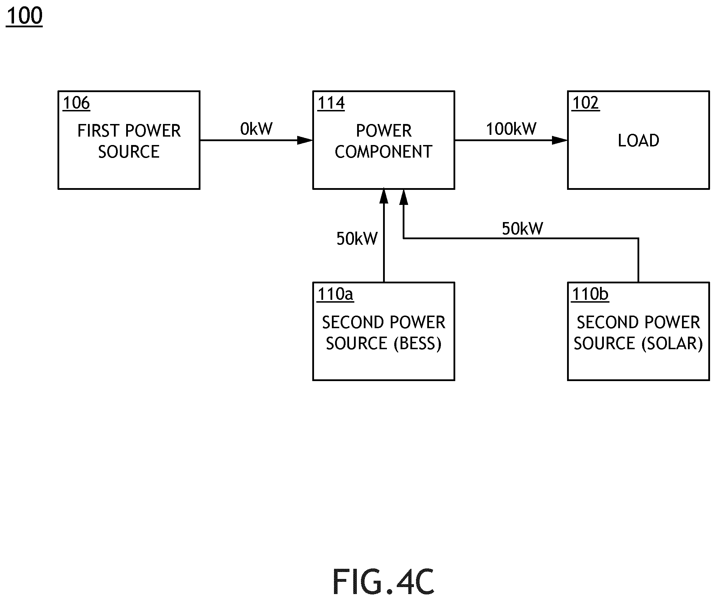

In embodiments, the system 100 is configured to deliver power to the load using a green power from one or more of the second power sources 110. For example, the load 102 may be powered solely by one of the second power sources 110b (e.g., a solar generator) via the power component 114, as shown in FIG. 4B. In another example, the load 102 may be powered by two or more second power sources 110a-b (e.g., 50 kW from the BESS and 50 kW from the solar generator) via the power component 114, as shown in FIG. 4C.

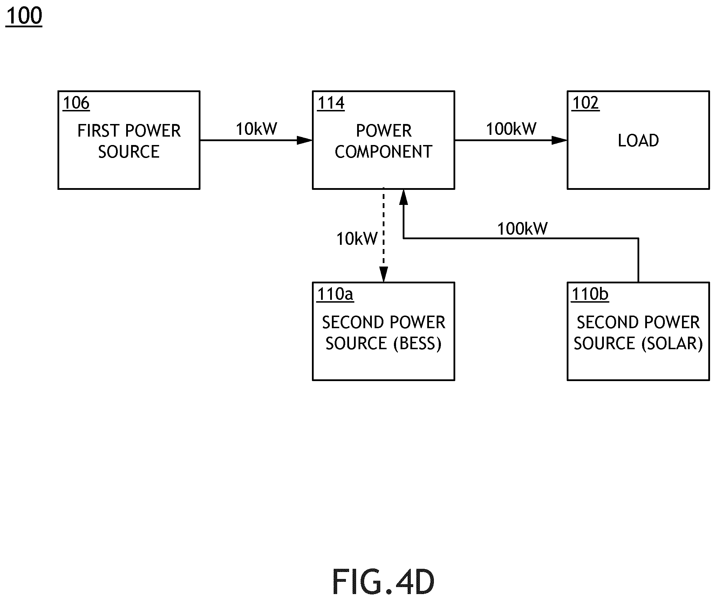

In embodiments, the system 100 is configured to deliver power from one or more second power sources 110 to the load 102 while a battery of one or more of the one or more second power sources 110 is being charged. For example, the load 102 may be powered solely by one second power source 110b (e.g., the solar generator), while the other second power source 110a (e.g., the BESS) is charged by the first power source 106, as shown in FIG. 4D. The other second power source 110a may also be charged by another second power source 110b via the power component 114 (e.g., the solar generator may charge the BESS).

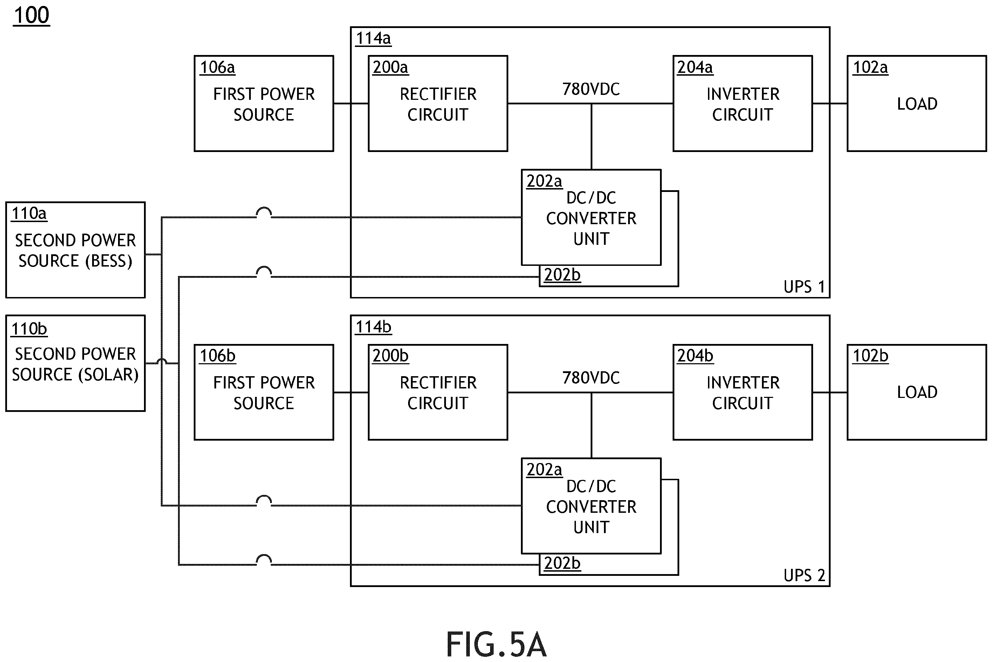

FIGS. 5A-5B illustrate block diagrams of systems 100 for delivering power to a load 102, in accordance with one or more embodiments of the disclosure. In embodiments, the system 100 may include two or more power components 114a-b configured to deliver power to two or more loads 102. For example, the system may include two power components 114a-b each electrically coupled to a respective load 102a-b. The power components 114a-b may be both electrically coupled to the same first power sources 110a-b (e.g., a BESS and solar generator, respectively) via respective DC/DC converter circuits 202a-d, as shown in FIG. 5A.

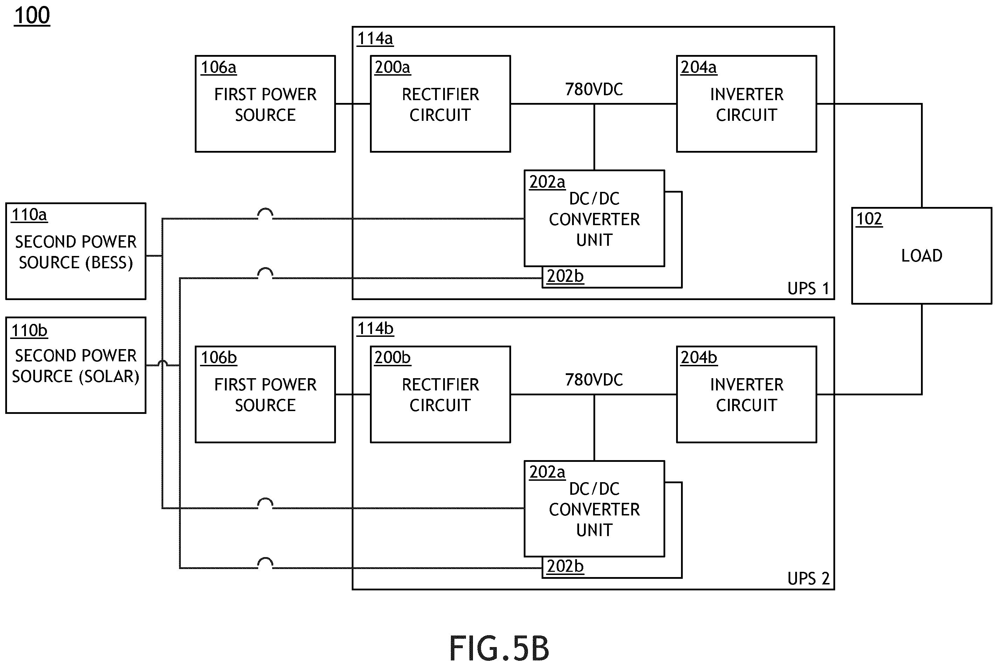

In embodiments, the system may include two or more power components 114a-b configured to deliver power to a same load 102. For example, the system may include two power components 114a-b, each electrically coupled to the same loads 102. The power components 114a-b may both be electrically coupled to the same first power sources 110a-b (e.g., a BESS and solar generator, respectively) via respective DC/DC converter circuits 202a-d, as shown in FIG. 5B.

In embodiments, the DC/DC converter circuit 202 is used to increase the voltage from one or more second power sources 110. For example, the second power source 110 may include a battery that operates at a voltage lower than the final output voltage (e.g., 540 VDC).

In embodiments, the second power source 110 supplies a second input power 104 in a range of 800 VDC to 1500 VDC (e.g., second input powers 104, such as green technology power, often have higher voltages than first input powers 104 such as utility power). This voltage range is higher than what typical power components, such as uninterruptible power supplied (UPS) can accept (e.g., with typical UPSs accepting voltages up to 700 VDC or 800 VDC). The DC/DC converter circuit 202 ensures that the one or more second power sources 110 will be able to interface with the power component 114.

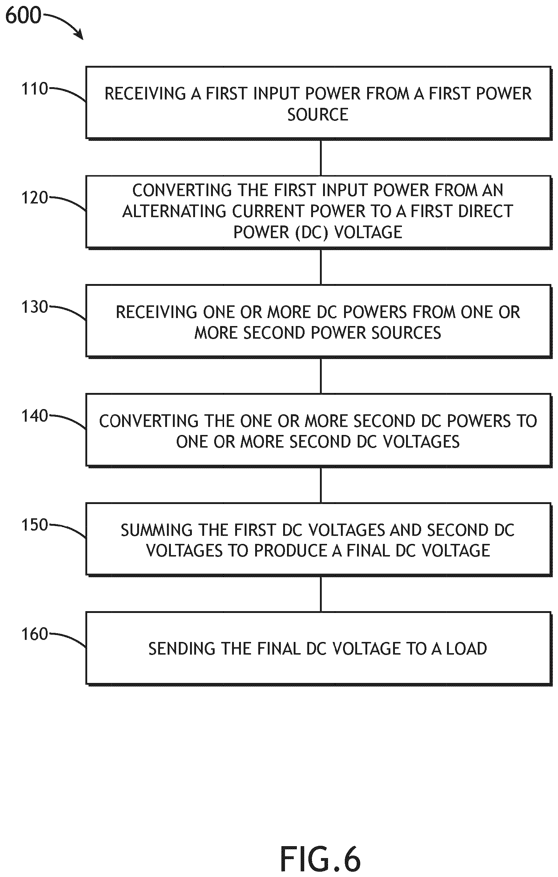

FIG. 6 illustrates a process flow diagram depicting a method 600 for supplying power to a load, in accordance with one or more embodiments of the disclosure. The method 600 may be performed via the system 100 and power component 114 as described herein. One or more steps of the method 600 may be performed via one or more processors 210 having received instructions stored in memory 212.

In embodiments, the method 600 includes a step 602 of receiving the first input power 104 from the first power source 106. In embodiments, the method 600 includes a step 604 of converting the first input power 104 from AC power to a first DC power (e.g., via the rectifier circuit 200). In embodiments, the method 600 includes a step 606 of receiving one or more second powers from one or more second power sources 110. In embodiments, the method 600 includes a step 608 of converting the one or more second powers to one or more second DC powers. For example, once the power component has received one or more second input powers 108 (e.g., 1500 VDC) from the one or more second power sources 110, one or more DC/DC converter circuits 202 will convert the one or more second input powers 108 to one or more second DC powers compatible with the power component 114 and/or the load 102.

In embodiments, the method 600 includes a step 610 of merging an output of the first DC source (e.g., the first DC power) and an output of the one or more second DC sources (e.g., the one or more second DC powers) to produce a final DC power (e.g., having a final DC voltage of approximately 780 V). The merging of the first DC power and the one or more second power may be performed via the DC link 206. In an alternative embodiment, if there are two or more second DC powers, the two or more second DC powers may be combined before merging the powers with the first DC power. In embodiments, the method 600 includes a step 612 of transmitting the final DC power to the load 102.

In embodiments, the method 600 includes a step of, before transmitting the final power to the load, converting the final DC power to an output AC power (e.g., via the inverter circuit 204. The second power sources 110 of the method 600 may include green power sources.

The one or more processors 210 of the controller 208 may include any processor or processing element known in the art. For the purposes of the present disclosure, the term "processor" or "processing element" may be broadly defined to encompass any device having one or more processing or logic elements (e.g., one or more microprocessor devices, one or more application-specific integrated circuit (ASIC) devices, one or more field programmable gate arrays (FPGAs), or one or more digital signal processors (DSPs)). In this sense, the one or more processors 210 may include any device configured to execute algorithms and/or instructions (e.g., program instructions stored in memory 212). In some embodiments, the one or more processors 210 may be embodied as a desktop computer, mainframe computer system, workstation, image computer, parallel processor, networked computer, or any other computer system configured to execute program instructions. Further, the steps described throughout the present disclosure may be carried out by a single controller or, alternatively, multiple controllers. Additionally, the controller 208 may include one or more controllers housed in a common housing or within multiple housings.

The memory 212 may include any storage medium known in the art suitable for storing program instructions executable by the associated one or more processors 210. For example, the memory 212 may include a non-transitory memory medium. By way of another example, the memory 212 may include, but is not limited to, a read-only memory (ROM), a random-access memory (RAM), a magnetic or optical memory device (e.g., disk), a magnetic tape, a solid-state drive and the like. It is further noted that the memory 212 may be housed in a common controller housing with the one or more processors 210. In some embodiments, the memory 212 may be located remotely with respect to the physical location of the one or more processors 210 and the controller 208. For instance, the one or more processors 210 of the controller 208 may access a remote memory (e.g., server), accessible through a network (e.g., internet or intranet).

In embodiments, the one or more processors 210 are configured to obtain, build, and/or train a power artificial intelligence (AI) or machine learning (ML) model 124 stored in the memory 212. For example, the one or more processors 210 may be configured to obtain power data (e.g., data associated with the first input power 104, including data associated with the one or more second input power 108, the output power 112, voltages associated with the power component, and/or data associated with power component elements (e.g., the rectifier circuit 200, the one or more DC/DC converter circuits 202, the inverter circuit 204, the DC link 206, and the fault protection circuit 214). In another example, the one or more processors 210 may be configured to, based on the power data and the trained power thermal management AI/ML model, infer a power setting. For example, the power setting may include switching power from the first power source 106 to the second power source 110 when the AI/ML model predicts that the second power source 110 is capable of supplying power to the load 102. In embodiments, system 100 is configured to perform one or more steps of the method 600 without utilizing a trained Al/ML model. Training the AI/ML model may include training that optimizes power flow from available AC and DC sources and/or training focused on lowering electric energy costs.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Those skilled in the art will recognize that it is common within the art to describe devices and/or processes in the fashion set forth herein, and thereafter use engineering practices to integrate such described devices and/or processes into power and/or data processing systems. That is, at least a portion of the devices and/or processes described herein can be integrated into a data processing system via a reasonable amount of experimentation. Those having skill in the art will recognize that a typical power and/or data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical power and/or data processing system may be implemented utilizing any suitable commercially available components, such as those typically found in power and/or data computing/communication and/or network computing/communication systems.

It is further contemplated that each of the embodiments of the method described above may include any other step(s) of any other method(s) described herein. In addition, each of the embodiments of the method described above may be performed by any of the systems described herein.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true spirit and scope of the subject matter described herein. Furthermore, it is to be understood that the invention is defined by the appended claims.
The disclosure comprises the following items:
1. A power component configured to supply an output power comprising:
   a rectifier circuit configured to receive a first input power from a first power source and convert the first input power to a first direct current (DC) power, wherein the first input power comprises an alternative current (AC);
   one or more DC/DC converter circuits configured to receive one or more second input powers from one or more second power sources and convert the one or more second input powers into one or more second DC powers;
   a DC link configured to receive the first DC power and the one or more second DC powers, wherein the DC link merges an output of the first DC source and an output of the one or more second DC sources to produce a final DC power comprising a final DC voltage;
   an inverter circuit configured to receive the final DC power and convert the final DC power to the output power; and
   a fault protection circuit configured to interrupt power flow upon a detection of an improper power flow between the one or more second power sources and at least one of the one or more DC/DC converter circuits.
2. The power component of item 1, wherein the one or more second power sources comprises a battery energy storage system (BESS), wherein the BESS is capable of being charged by the first power source.
3. The power component of item 1 or item 2, wherein the one or more second power sources comprises at least one of a solar power generator, a fuel cell or a wind power generator.
4. The power component of any preceding item, wherein the one or more second power sources comprises a battery energy storage system (BESS) and at least one of a solar power generator, a fuel cell or a wind power generator, wherein the BESS is capable of being charged by the first power source.
5. The power component of any preceding item, wherein the final DC power comprises a merging of an output of two or more second powers.
6. The power component of any preceding item, wherein the fault protection circuit comprises a pyro-fuse.
7. The power component of any preceding item, wherein the fault protection circuit comprises a crowbar circuit.
8. The power component of any preceding item, wherein one of the one or more DC/DC converter circuits are configured to accept 800 VDC to 1500 VDC.
9. The power component of any preceding item, wherein one of the one or more DC/DC converter circuits comprises a structure that splits an input VDC onto two rails, wherein the two rails each receive approximately half the input VDC.
10. The power component of any preceding item, wherein the one of the one or more DC/DC converter circuits is configured to accept approximately 1500 VDC.
11. The power component of any preceding item, wherein one of the one or more DC/DC converter circuits comprises an array of switches for modulating a flow of power, wherein the array of switches comprise insulated-gate bipolar transistors.
12. The power component of any preceding item, wherein one of the one or more DC/DC converter circuits comprises insulated-gate bipolar transistors.
13. The power component of any preceding item, further comprising one or more processors, wherein the one or more processor are configured to:
   train a power artificial intelligence (AI) or machine learning (ML) model stored in a memory; and
   infer a power setting based on the Al or ML model, wherein the power setting comprises switching power from the first power source to the second power source when the Al or ML model predicts that the second power source is capable of supplying power to a load.
14. A power system comprising:
   one or more power components configured to supply an output power comprising:
   a rectifier circuit configured to receive a first input power from a first power source and convert the first input power to a first direct current (DC) power, wherein the first input power comprises an alternative current (AC);
   one or more DC/DC converter circuits configured to receive one or more second input powers from one or more second power sources and convert the one or more second input powers into one or more second DC voltages;
   a DC link configured to receive the first DC power and the one or more second DC voltages, wherein the DC link merges an output of the first DC source and output of the one or more second DC sources to produce a final DC power comprising a final DC voltage;
   an inverter circuit configured to receive the final DC power and convert the final DC power to the output power; and
   a fault protection circuit configured to interrupt power flow upon a detection of an improper power flow between the one or more second power sources and at least one of the one or more DC/DC converter circuits.
15. The power system of item 14, wherein the power system comprises two or more power components, each of the two or more power components powered by the first power source and the one or more second power sources.
16. The power system of item 14 or item 15, wherein the output power of each of the two or more power components powers a respective load.
17. The power system of any of items 14-16, wherein the output power of each of the two or more power components powers a common load.
18. A method supplying power to a load comprising:
   receiving a first input power from a first power source;
   converting the first input power from an alternating current (AC) power to a first direct current (DC) power;
   receiving one or more second input powers from one or more second power sources;
   converting the one or more second input powers to one or more second DC powers;
   merging the first DC power and the one or more second DC powers to produce a final DC power; and
   transmitting the final DC power to the load.
19. The method of item 18, further comprising:
   Before transmitting the final DC power to the load, converting the final DC power to an output AC power.
20. The method of item 18 or item 19, wherein one of the one or more second power sources is a green power source.

## Claims

1. A power component configured to supply an output power comprising:
a rectifier circuit configured to receive a first input power from a first power source and convert the first input power to a first direct current, DC, power, wherein the first input power comprises an alternative current, AC;
one or more DC/DC converter circuits configured to receive one or more second input powers from one or more second power sources and convert the one or more second input powers into one or more second DC powers;
a DC link configured to receive the first DC power and the one or more second DC powers, wherein the DC link merges an output of the first DC source and an output of the one or more second DC sources to produce a final DC power comprising a final DC voltage;
an inverter circuit configured to receive the final DC power and convert the final DC power to the output power; and
a fault protection circuit configured to interrupt power flow upon a detection of an improper power flow between the one or more second power sources and at least one of the one or more DC/DC converter circuits.

2. The power component of claim 1, wherein the one or more second power sources comprises a battery energy storage system, BESS, wherein the BESS is capable of being charged by the first power source.

3. The power component of claim 1 or claim 2, wherein the one or more second power sources comprises at least one of a solar power generator, a fuel cell or a wind power generator.

4. The power component of any preceding claim, wherein the final DC power comprises a merging of an output of two or more second powers.

5. The power component of any preceding claim, wherein the fault protection circuit comprises a pyro-fuse, or wherein the fault protection circuit comprises a crowbar circuit.

6. The power component of any preceding claim, wherein one of the one or more DC/DC converter circuits are configured to accept 800 VDC to 1500 VDC, or wherein the one or more DC/DC convertor circuits is configured to accept approximately 1500 VDC.

7. The power component of claim 6, wherein one of the one or more DC/DC converter circuits comprises a structure configured to split an input VDC onto two rails, wherein the two rails each receive approximately half the input VDC.

8. The power component of any preceding claim, wherein one of the one or more DC/DC converter circuits comprises an array of switches for modulating a flow of power, wherein the array of switches comprise insulated-gate bipolar transistors.

9. The power component of any preceding claim, wherein one of the one or more DC/DC converter circuits comprises insulated-gate bipolar transistors.

10. The power component of any preceding claim, further comprising one or more processors, wherein the one or more processors are configured to:
train a power artificial intelligence, Al, or machine learning, ML, model stored in a memory; and
infer a power setting based on the Al or ML model, wherein the power setting comprises switching power from the first power source to the second power source when the Al or ML model predicts that the second power source is capable of supplying power to a load.

11. A power system comprising a plurality of the power components according to any preceding claim.

12. The power system of claim 11, each of the power components is powered by the first power source and the one or more second power sources, and wherein the output power of each of the two or more power components powers a respective load or the output power of each of the two or more power components powers a common load.

13. A method for supplying power to a load comprising:
receiving a first input power from a first power source;
converting the first input power from an alternating current, AC, power to a first direct current, DC, power;
receiving one or more second input powers from one or more second power sources;
converting the one or more second input powers to one or more second DC powers;
merging the first DC power and the one or more second DC powers to produce a final DC power; and
transmitting the final DC power to the load.

14. The method of claim 13, further comprising:
before transmitting the final DC power to the load, converting the final DC power to an output AC power.

15. The method of claim 13 or claim 14, wherein one of the one or more second power sources is a green power source.
